# EUROPÄISCHE PATENTSCHRIFT

(11) **EP 1 098 030 B1**
(45) Veröffentlichungstag und Bekanntmachung des Hinweises auf die Patenterteilung: **18.02.2004**
(21) Anmeldenummer: 00122778.4
(22) Anmeldetag: 19.10.2000
(51) Int. Cl.: D06N 3/00, B29C 70/10, B29C 51/14

(54) **Stoffspiegelträger**
Cloth carrier
Support pour tissu

(30) Priorität: 04.11.1999 DE 19953111
(43) Veröffentlichungstag der Anmeldung: 09.05.2001
(73) Patentinhaber: Seeber Systemtechnik KG, 67547 Worms (DE)
(72) Erfinder: Orth, Arno, 67580 Hamm (DE)
(74) Vertreter: Zellentin, Wiger, Dipl.-Ing.

(56) Entgegenhaltungen:
- EP-A- 0 393 476
- DE-A- 4 116 040
- GB-A- 1 293 009
- US-A- 4 263 727

## Beschreibung

Die vorliegende Erfindung betrifft einen Stoffspiegelträger sowie ein Verfahren zu seiner Herstellung. Herkömmliche Stoffspiegelträger bestehen aus einem Träger, mit dem ein Schaumrücken eines Dekostoffes verklebt ist. Der Träger selbst besteht dabei aus Naturfasern und Epoxidharz, dieser wird zunächst in der gewünschten Kontur und dreidimensionalen Form hergestellt und mit dem den Schaumrücken tragenden Stoff verklebt.

Insbesondere dienen solche Stoffspiegelträger der Innenverkleidung von Kraftfahrzeugen, beispielsweise an den Türen.

Nachteilig an solchen Stoffspiegelträgern ist einmal ein relativ hohes, durch den Naturfaserverbund mit dem Epoxidharz bedingtes Gewicht. Weiterhin kann das herkömmliche Material bei tieferen Temperaturen splittern und das Epoxidharz ist nicht geruchsneutral. Die Produkte sind relativ kostspielig, letztlich können die Produkte bei Klimawechseln delaminieren.

Am herkömmlichen Herstellungsverfahren ist ferner nachteilig, daß ein separates Pressen oder Spritzgießen des Trägers erforderlich ist, daß die Herstellung aufwendig ist und der Stoff zu Faltenbildung neigt.

Aus der DE 37 22 873 A1 ist ein Verfahren bekannt, bei welchem ein fester formstabiler Träger aus Blech oder ein Polypropylen enthaltendes Faservlies mit einem Schaumstoff und einer Dekorschicht miteinander verbunden werden.

Dies geschieht so, daß man zunächst den Schaumstoff mit einer Dekorschicht z.B. durch Flammkaschieren versieht, danach den Träger auf Schmelztemperatur des Schaumstoffes bringt und die Teile unter Anschmelzen des Schaums miteinander verpresst, wobei die für den Schmelzvorgang der Oberfläche der Zwischenschicht erforderliche Wärme ausschließlich aus dem vorher erwärmten Träger stammt.

Nachteilig ist daran, daß der Schmelzvorgang den Schaum zu stark aufschmilzt, so daß dessen Eigenschaften leiden. Dies rührt daher, daß der Wärmeinhalt des Trägers nicht so gesteuert werden kann, daß der Schaum wie beim Flammenkaschieren nur oberflächlich in sehr dünner Schicht ausschmilzt. Zudem dringt der zu viel aufgeschmolzene Schaum durch den Preßvorgang nicht nur in den Träger ein (wenn ein Vlies verwendet wird), sondern auch in den Schaum selbst und verdichtet diesen. Eine nachträgliche dreidimensionale Verformung des Preßlings ist nicht möglich.

Aus der DE 41 16 040 A1 ist femer ein dreischichtiges Material für Kleidungsstücke bekannt, bestehend aus einer Textilmateriallage, einer Schaumstofflage und einem Vlies, welches eine gute Hautverträglichkeit haben soll, wobei das Vlies auch ein Strickmaterial sein kann. Textillage und Schaumstofflage sollen dabei mit Hilfe einer Schmelzfolie verbunden sein. Hier ist die Formbeständigkeit beschränkt, so daß Teile von Innenverkleidungen damit nicht hergestellt werden können.

Die Aufgabe der vorliegenden Erfindung besteht demgegenüber darin, Stoffspiegelträger mit niedrigem Gewicht herzustellen, die unter anderem eine erhöhte Klimabeständigkeit aufweisen, die formstabil sind und nicht zum splittern neigen. Darüber hinaus sollen die weichen Eigenschaften des Schaumstoffes durch das Herstellungsverfahren nicht beinträchtigt werden.

Die Lösung dieser Aufgabe gelingt mit einem Stoffspiegelträger insbesondere für die Innenverkleidung von Kraftfahrzeugen, bestehend aus einem an das zu verkleidende Feld formangepaßten, mit einem Schaumrücken versehenen Träger und einem sichtseitig auf dem Schaum angeordneten Stoffspiegel, bei welchem erfindungsgemäß der Träger ein Bindervlies ist und sowohl der Träger als auch der Stoff mit dem Schaumrücken durch Flammkaschieren verbunden sind.

Die wesentlichen Vorteile einer solchen Lösung sind die folgenden. Das Fertigteil ist um bis zu 30 % leichter, es kann nicht splittern und es ist klimabeständig. Darüber hinaus bewirkt es keine Geruchsbelästigung.

Besonders vorteilhaft ist auch, daß sich die erfindungsgemäßen Stoffspiegelträger wesentlich einfacher herstellen lassen, wie dies die Verfahrensansprüche zum Ausdruck bringen. Dabei werden die mit dem Schaumrücken zu verbindenden Teile bahnförmig zusammengeführt, der Schaumrücken beidseitig in an sich bekannter Weise angeflämmt und der Dreierverbund aus Schaumrücken, Bindervlies und Stoffspiegel durch einen Walzenspalt geführt, der die Bahnen aneinanderpreßt und beidseitig (gleichzeitig) mit den angeschmolzenen Schaumoberflächen verbindet. Danach wird der herzustellende Stoffspiegelträger ausgestanzt.

Da das Bindervlies warm verformbar ist, genügt für die dreidimensionale Formgebung nunmehr ein Anwärmen des Vlieses auf z. B. 140° C und das Formen und Abkühlen in einem kalten Preßwerkzeug. Da der Stoff mit dem Trägerteil vor der Verformung über den Schaumrücken schon fest verbunden ist, besteht auch keine Gefahr einer Faltenbildung beim Formen. Außerdem sind kürzere Taktzeiten als herkömmlich gewährleistet, da beim Verformen nur noch gekühlt werden muß. Der Schaumrücken besteht dabei in idealer Weise aus Polyurethan auf Polyesteroder Polyetherbasis, welcher gleichzeitig weich und dauerelastisch und haptisch angenehm ist.

Grundsätzlich können aber auch Polyolefinschäume eingesetzt werden.

Das Bindervlies besteht z. B. aus einer Mischung von thermoplastischen mit duroplastischen Fasern (Polypropylen, Polyester) sowie einem geeigneten Bindemittel, wie z. B. Butadien-Styrol. Im übrigen wird dieses Material im Kraftfahrzeugbau etwa bei nichttragenden Verkleidungen z. B. im Kofferraumbereich angewendet.

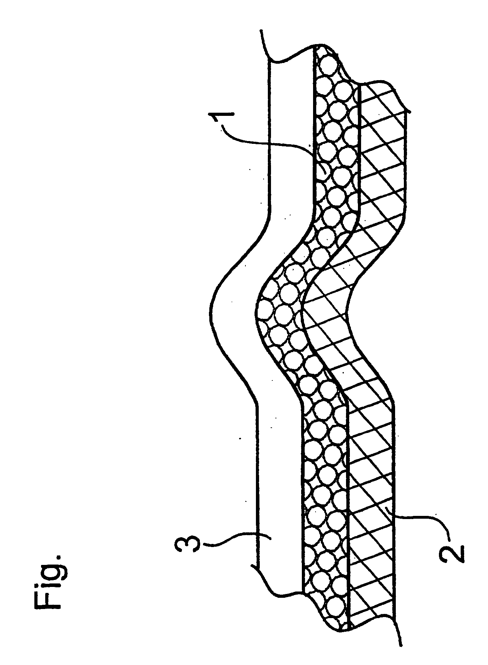

Die beiliegende Figur zeigt ein Ausführungsbeispiel.

Mit dem Schaumrücken 1 ist beidseitig einmal der Träger 2 und gegenüberliegend der Stoffspiegel 3 durch Flammkaschieren verbunden. Der Träger 2 besteht aus einem Bindervlies mit von 50 bis 70 Gew.-% Fasern und von 30 bis 50 Gew.-% Binderanteil, die Fasern bestehen aus von 0 bis 20 Gew.-% Polypropylen und von 80 bis 100 Gew.-% Polyester, der Binder besteht aus Butadien-Styrol.

Der Schaum ist ein Polyurethanschaum, z. B. RG 75 auf Polyesterbasis, der Stoff ein üblicher Dekostoff.

Der Träger weist eine Materialstärke von etwa 3 mm und der Schaumrücken eine solche von etwa 6 mm auf.

Das Formteil wird zunächst als ebene Bahn hergestellt und wie angedeutet nach Bedarf dreidimensional verformt, wobei man dieses erst erwärmt und dann in einer Kaltpresse formt.

## Patentansprüche

1. Verfahren zur Herstellung von dreidimensional geformten Stoffspiegelträgern insbesondere für die Innenverkleidung von Kraftfahrzeugen, wobei man ein Trägervlies mit einem Schaumrücken und einem Stoffspiegel versieht wobei man in einem ersten Schritt den Schaumrücken, den Stoffspiegel und das Vlies durch Flammkaschieren gleichzeitig miteinander verbindet, wobei das Trägervlies ein Bindervlies ist und in einem zweiten Schritt den Verbund auf Erweichungstemperatur des Binders bringt und danach in einem kalten Werkzeug presst und dadurch das Vlies unter Formgebung verdichtet.

2. Verfahren nach Anspruch 1 **dadurch gekennzeichnet, dass** der Schaum aus Polyurethan auf Polyester- oder Polyetherbasis besteht.

3. Verfahren nach Anspruch 1 oder 2 **dadurch gekennzeichnet, dass** man den Verbund vor dem Verpressen auf eine Temperatur von etwa 140° C erwärmt.

## Claims

1. Method for the production of three-dimensionally shaped cloth carriers, in particular for the interior lining of motor vehicles, wherein a carrier fleece is provided with a foam back and a cloth face, wherein the foam back, the cloth face and the fleece are, in a first step, flame-bonded to each other at the same time, with the carrier fleece being a binder fleece, and wherein the composite is, in a second step, brought to the softening temperature of the binder and then molded in a cold tool, whereby the fleece is compacted under shaping.

2. Method according to Claim 1, **characterized in that** the foam is made of polyurethane on polyester or polyether base.

3. Method according to Claim 1 or 2, **characterized in that** the composite, prior to being molded, is heated up to a temperature of approximately 140 °C.

## Revendications

1. Procédé de fabrication de supports pour tissu formés de manière tridimensionnelle, notamment pour l'habillage intérieur de véhicules, un non-tissé porteur étant muni d'un envers en mousse et d'un support pour tissu, l'envers en mousse, le support pour tissu et le non-tissé étant, dans une première étape, simultanément raccordés entre eux par contrecollage à la flamme, le non-tissé porteur étant un non-tissé liant et, la composition étant, dans une deuxième étape, amenée à la température d'amollissement du liant et étant ensuite pressée dans un outil froid, et le non-tissé étant ainsi comprimé en étant formé.

2. Procédé selon la revendication 1, **caractérisé en ce que** la mousse est constituée de polyuréthanne à base de polyester ou polyéther.

3. Procédé selon la revendication 1 ou 2, **caractérisé en ce que** l'on échauffe la composition à une température d'environ 140° C avant la compression.
